# EUROPÄISCHE PATENTSCHRIFT

(11) **EP 1 804 533 B1**
(45) Veröffentlichungstag und Bekanntmachung des Hinweises auf die Patenterteilung: **18.10.2017**
(21) Anmeldenummer: 07106643.5
(22) Anmeldetag: 23.07.1999
(51) Int. Cl.: H04W 88/18

(54) **Verfahren zur Übertragung von digitalen Nutzdaten**
Method for transmitting digital payload data
Procédé de transmission de données utiles numériques

(30) Priorität: 24.07.1998 DE 19833318
(43) Veröffentlichungstag der Anmeldung: 04.07.2007
(62) Teilanmeldung aus: 99947246.7
(73) Patentinhaber: IPCom GmbH & Co. KG, 82049 Pullach (DE)
(72) Erfinder: Lappe, Dirk, 76228 Karlsruhe (DE); Hans, Martin, 31162 Bad Salzdetfurth (DE); Laumen, Josef, 81541 München (DE)
(74) Vertreter: Tomlinson, Edward James

(56) Entgegenhaltungen:
- EP-A- 0 849 965
- WO-A-96/19907
- WO-A-97/12488
- WO-A1-96/23297
- GB-A- 2 241 850
- US-A- 5 414 796
- US-A- 5 734 979

## Beschreibung

### Stand der Technik

Die Erfindung geht von einem Verfahren zur Übertragung von digitalen Nutzdaten nach der Gattung des Hauptanspruchs aus.

Verfahren zur Übertragung von digitalen Nutzdaten von einer ersten Mobilstation zu einer zweiten Mobilstation sind bereits bekannt und beispielsweise gemäß dem GSM-Standard (Global System for Mobile Communications) für Sprachübertragung realisiert.

Aus der EP 0 849 965 A1 ist eine Telefonvorrichtung bekannt, bei der sich mit besonderem Vorteil in geschlossenen Räumen unter Zuhilfenahme einer Dualmode-Basisstation sowohl über ein vorhandenes Mobilfunk- als auch über ein Festnetz-Telekommunikationsnetz telefonieren lässt. Die Dualmode-Basisstation, die man auch als Telefon-Zwillingsstation bezeichnen kann, verfügt über eine DECT-Ladestation sowie über eine DCS/GSM-Ladestation mit Sprachschnittstelle. Durch das Einstecken der DCS/GSM-Mobilstation in die Dualmode-Basisstation wird diese in die Lage versetzt, Mobilfunksignale zu empfangen. Diese Mobilfunksignale werden dann in DECT-Signale umgesetzt. Über eine DECT-Antenne wird dann die Verbindung zum DECT-Handy aufgebaut. In ähnlicher Weise werden auch die PSDN/ISDN-Signale umgesetzt und über DECT abgestrahlt.

Aus der WO 97/02713 ist ein digitales zellulares Kommunikationssystem bekannt, das Rufweiterleitung mit besserer Sprachqualität unterstützt durch Vermeidung unnötiger Sprachdecodierung, wenn ein Anruf von einem Netzwerk zu einem anderen Netzwerk weitergeleitet wird. Dazu enthält ein neues Informationselement einen Netzwerk-Code des sendenden Mobile Service Switching Centers (MSC), so dass die empfangenden bzw. die weitergeleitete MSC mit der sendenden MSC in einen strukturierten Dialog treten kann in Bezug auf den Sprach-Codec.

Aus der WO 96/16521 ist ein digitales mobiles Kommunikationssystem bekannt mit Mobilstationen und Festnetz, die Sprach-Codecs enthalten. In Gesprächen zwischen Mobilstationen werden die Sprach-Codecs des Festnetzes so gesteuert, dass die Frames von der ersten Basisstation mit nur kleinen Modifikationen durch das Paar der Tandem verbundenen Sprach-Codecs des Festnetzes weitergeleitet werden zur zweiten Basisstation, ohne Sprachkodierung oder -dekodierung.

Aus der WO 96/32823 A1 sind Transcoder bekannt, die ein Tandem-Coding von Sprache verhindern. Die Transcoder enthalten Sprach-Codecs, die Sprachsignale in Sprachparameter bzw. Sprachparameter in Sprachsignale umwandeln. In Ergänzung dieses Normal-Modes der Transcoder senden und empfangen sie Sprachparameter durch ein PCM-Interface in einen Teilkanal der PCM Sprach-Samples. So kann Tandem-Coding vermieden werden bei gleichzeitiger Aufrechterhaltung des Standard PCM-Interfaces.

Aus der US 5,414,796 A ist ein Sprach-Codec mit variabler Kodierungssprache bekannt von digitalisierten Sprachsignalen. Das Maß der Sprachaktivität für jeden Frame wird festgestellt. Entsprechend wird eine Ausgabepaket-Datenrate ausgewählt aus einer Auswahl von Datenraten, wobei die niedrigste Datenrate einem Minimum von Sprachaktivitäten entspricht.

Aus der WO 96/23297 A1 sind ein Verfahren und eine Vorrichtung zum Entdecken und Umgehen von Tandem Sprachkodierung bekannt. Wenn beide Gesprächspartner den gleichen Sprach-Codec benutzen, klingt das resultierende Sprachausgabesignal besser, wenn die Tandem Sprachkodierung vermieden wird. Dazu tauschen die lokalen Sprachcodecs Kennungscodes aus, bei deren gegenseitiger Entdeckung paketierte Sprachdaten und Redundanzinformationen die Least Significant Bits vom gesendeten PCM Sample ersetzen. Wenn die Redundanzüberprüfung der Sprachcodecs gültige paketierte Daten empfangen, stoppt der lokale Sprachcodec seine PCM Aussendung.

### Vorteile der Erfindung

Die Erfindung wird durch die Merkmale des Hauptanspruchs 1 gekennzeichnet.

Das erfindungsgemäße Verfahren mit den Merkmalen des Hauptanspruchs hat demgegenüber den Vorteil, dass im Verfahren zur Übertragung von digitalen Nutzdaten von einer ersten Mobilstation über eine Zwischenstation zu einer zweiten Mobilstation von der Zwischenstation Signalisierungsdaten an die zweite Mobilstation übertragen werden, wobei die Signalisierungsdaten Informationen über die Art der Kodierung der Nutzdaten in der ersten Stufe nach dem ersten Mobilfunkstandard in Form einer Rufnummer der ersten Mobilstation enthalten, dass die Signalisierungsdaten ein- oder mehrmalig über einen separaten Kontrollkanal von der Zwischenstation an die zweite Mobilstation übertragen werden, und dass die von der zweiten Mobilstation in der zweiten Stufe dekodierten Nutzdaten in Abhängigkeit der von der zweiten Mobilstation empfangenen Signalisierungsdaten von der zweiten Mobilstation in der ersten Stufe quelldekodiert werden.

Von Vorteil ist es, dass die Nutzdaten von der ersten Mobilstation für die Übertragung in einem ersten Telekommunikationsnetz in einer ersten Stufe kodiert, vorzugsweise quellkodiert, und in einer zweiten Stufe kodiert, vorzugsweise kanalkodiert, werden, dass die in der ersten und in der zweiten Stufe kodierten Nutzdaten in Form eines ersten Bitstroms über einen Übertragungskanal des ersten Telekommunikationsnetzes nach einem ersten Mobilfunkstandard zu einer Zwischenstation übertragen werden, dass die Nutzdaten des ersten Bitstroms von der Zwischenstation in der zweiten Stufe dekodiert, vorzugsweise kanaldekodiert, werden, dass die Nutzdaten von der Zwischenstation für die Übertragung in einem zweiten Telekommunikationsnetz nach einem zweiten Mobilfunkstandard in der zweiten Stufe kodiert, vorzugsweise kanalkodiert, werden, dass die nach dem ersten Mobilfunkstandard in der ersten Stufe kodierten Nutzdaten über einen Übertragungskanal des zweiten Telekommunikationsnetzes zur zweiten Mobilstation übertragen werden, dass von der Zwischenstation Signalisierungsdaten an die zweite Mobilstation übertragen werden, wobei die Signalisierungsdaten Informationen über die Art der Kodierung der Nutzdaten in der ersten Stufe enthalten, dass die Nutzdaten von der zweiten Mobilstation in der zweiten Stufe dekodiert, vorzugsweise kanaldekodiert, werden und dass die von der zweiten Mobilstation in der zweiten Stufe dekodierten Nutzdaten in Abhängigkeit der von der zweiten Mobilstation empfangenen Signalisierungsdaten von der zweiten Mobilstation in der ersten Stufe dekodiert, vorzugsweise quelldekodiert, werden. Auf diese Weise werden die in der Zwischenstation empfangenen Nutzdaten lediglich in der zweiten Stufe dekodiert, nicht jedoch in der ersten Stufe. Eine Kodierung in der ersten Stufe für die Übertragung der Nutzdaten im zweiten Telekommunikationsnetz ist dann nicht erforderlich. Eine Dekodierung in der ersten Stufe der in der zweiten Mobilstation empfangenen Nutzdaten kann dann durch Auswertung der von der Zwischenstation mitübertragenen Signalisierungsdaten erfolgen. Eine Transkodierung zwischen verschiedenen Codes für die Kodierung in der ersten Stufe zur Übertragung im jeweiligen Telekommunikationsnetz kann somit vermieden werden, wodurch Rechenaufwand eingespart und der bei einer Transkodierung sich ergebende Nutzdatenverlust vermieden werden kann.

Durch die in den Unteransprüchen aufgeführten Maßnahmen sind vorteilhafte Weiterbildungen und Verbesserungen des im Hauptanspruch eingegebenen Verfahrens möglich.

Besonders vorteilhaft ist es, dass die Nutzdaten im ersten Telekommunikationsnetz nach einem ersten Mobilfunkstandard, insbesondere nach dem GSM-Standard (Global System for Mobile Communications), in der ersten und in der zweiten Stufe kodiert, vorzugsweise quell- und kanal kodiert, übertragen werden, dass die Nutzdaten im zweiten Telekommunikationsnetz nach einem zweiten Mobilfunkstandard, insbesondere nach dem UMTS-Standard (Universal Mobile Telecommunications System), zusammen mit den Signalisierungsdaten, die Informationen über die Kodierung der Nutzdaten in der ersten Stufe nach dem ersten Mobilfunkstandard umfassen, in der zweiten Stufe kodiert, vorzugsweise kanalkodiert, übertragen werden und dass die von der zweiten Mobilstation in der zweiten Stufe dekodierten, vorzugsweise kanaldekodierten, Nutzdaten von der zweiten Mobilstation nach Auswertung der Signalisierungsdaten nach dem ersten Mobilfunkstandard in der ersten Stufe dekodiert, vorzugsweise quelldekodiert werden.

Auf diese Weise können Nutzdaten zwischen Mobilstationen mit jeweils einer nach unterschiedlichem Mobilfunkstandard realisierten Luftschnittstelle übertragen werden, ohne das eine Transkodierung der Nutzdaten bezüglich des Codes für die Kodierung in der ersten Stufe erforderlich wäre, vorausgesetzt die zweite Mobilstation, die die Nutzdaten empfängt, ist in der Lage, eine Dekodierung der empfangenen Nutzdaten in der ersten Stufe nach dem ersten Mobilfunkstandard durchzuführen.

### Zeichnung

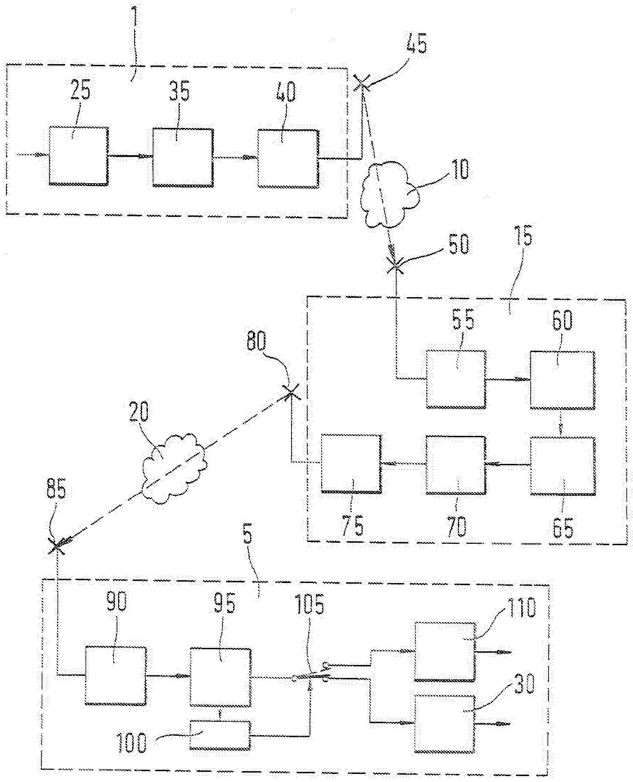

Ein Ausführungsbeispiel der Erfindung ist in der Zeichnung dargestellt und in der nachfolgenden Beschreibung näher erläutert. Es zeigt die einzige Figur ein Blockschaltbild für die Übertragung von Nutzerdaten von einer ersten Mobilstation über eine Zwischenstation zu einer zweiten Mobilstation über verschiedene Telekommunikationsnetze.

### Beschreibung des Ausführungsbeispiels

In der Figur kennzeichnet 1 eine erste Mobilstation, die nach einem ersten Mobilfunkstandard realisiert ist. Bei dem ersten Mobilfunkstandard kann es sich beispielsweise um den GSM-Standard (Global System for Mobile Communications) handeln. Die erste Mobilstation 1 soll im folgenden als GSM-Mobilstation ausgebildet sein. In der Figur sind lediglich die zur Beschreibung des erfindungsgemäßen Verfahrens erforderlichen Funktionsblöcke der ersten Mobilstation 1 dargestellt. Die erste Mobilstation 1 umfasst dabei einen als Quellkodierer ausgebildeten Kodierer 25 für eine Kodierung in einer ersten Stufe, der nach dem ersten Mobilfunkstandard, im beschriebenen Beispiel nach dem GSM-Standard ausgebildet ist. Der Quellkodierer 25 ist über einen ersten als Kanalkodierer ausgebildeten Kodierer 35 für eine Kodierung in einer zweiten Stufe, der ebenfalls nach dem ersten Mobilfunkstandard realisiert ist, mit einer ersten Sende-/Empfangseinheit 40 verbunden, an die eine erste Sende-/Empfangsantenne 45 angeschlossen ist. Von der ersten Sende-/Empfangsantenne 45 können Funksignale nach dem ersten Mobilfunkstandard über ein erstes Telekommunikationsnetz 10, das im beschriebenen Ausführungsbeispiel als GSM-Netz ausgebildet ist, an eine zweite Sende-/Empfangsantenne 50 einer Zwischenstation 15 übertragen werden. Die Zwischenstation 15 umfasst dabei eine zweite Sende-/Empfangseinheit 55, an die die zweite Sende-/Empfangsantenne 50 angeschlossen ist. Die zweite Sende-/Empfangseinheit 55 ist mit einem ersten als Kanaldekodierer ausgebildeten Dekodierer 60 für eine Dekodierung in der zweiten Stufe verbunden, der an eine Steuerung 65 der Zwischenstation 15 angeschlossen ist. Die Steuerung 65 ist über einen zweiten als Kanalkodierer ausgebildeten Kodierer 70 für die Kodierung in der zweiten Stufe mit einer dritten Sende-/Empfangseinheit 75 der Zwischenstation 15 verbunden, an die eine dritte Sende-/Empfangsantenne 80 angeschlossen ist. Von der dritten Sende-/Empfangsantenne 80 werden Funksignale nach einem zweiten Mobilfunkstandard über ein zweites Telekommunikationsnetz 20 an eine zweite Mobilstation 5 übertragen. Bei dem zweiten Mobilfunkstandard kann es sich beispielsweise um den UMTS-Standard (Universal Mobile Telecommunications System) handeln. Die Figur zeigt auch für die Zwischenstation 15 nur die für die Beschreibung des erfindungsgemäßen Verfahrens erforderlichen Funktionsblöcke. Dasselbe gilt für die zweite Mobilstation 5, die die Funksignale von der Zwischenstation 15 über eine vierte Sende-/Empfangsantenne 85 empfängt. Die zweite Mobilstation 5 umfasst eine vierte Sende-/Empfangseinheit 90, an die die vierte Sende-/Empfangsantenne 85 angeschlossen ist. Die vierte Sende-/Empfangseinheit 90 ist außerdem mit einem zweiten als Kanaldekodierer ausgebildeten Dekodierer 95 für die Dekodierung in der zweiten Stufe verbunden, an den eine Auswerteeinheit 100 angeschlossen ist. Der zweite Kanaldekodierer 95 ist über einen von der Auswerteeinheit 100 steuerbaren Schalter 105 entweder mit einem ersten als Quelldekodierer ausgebildeten Dekodierer 30 für eine Dekodierung in der ersten Stufe oder mit einem zweiten als Quelldekodierer ausgebildeten Dekodierer 110 für die Dekodierung in der ersten Stufe verbindbar. Der erste Quelldekodierer 30 ist dabei nach dem ersten Mobilfunkstandard realisiert und der zweite Quelldekodierer 110 ist nach dem zweiten Mobilfunkstandard realisiert. Im folgenden soll für den zweiten Mobilfunkstandard beispielhaft der UMTS-Standard gewählt werden, so dass die zweite Mobilstation 5 zumindest teilweise als GSM-/UMTS-Mobilstation ausgebildet ist. Dem Quellkodierer 25 werden digitale Nutzdaten zugeführt, bei denen es sich um Videodaten, um Audiodaten, um Textdaten, um Sprachdaten und/oder um sonstige beliebige Daten handeln kann. Im folgenden wird die Übertragung von Nutzdaten zwischen der ersten Mobilstation 1 und der zweiten Mobilstation 5 beispielhaft anhand der Übertragung von Sprachdaten beschrieben. Der Quellkodierer 25 ist dann als Sprachkodierer nach dem ersten Mobilfunkstandard, in diesem Beispiel nach dem GSM-Standard ausgebildet. Dabei kann dem Sprachkodierer 25 der GSM-Standard ITU-T G.729 zugrunde gelegt sein. Der Sprachkodierer 25 führt eine Quellkodierung der ihm zugeführten als Sprachdaten ausgebildeten Nutzdaten gemäß dem GSM-Standard durch. Die auf diese Weise quellkodierten Sprachdaten werden dem ersten Kanalkodierer 35 zugeführt, der eine Kanalkodierung der Sprachdaten, beispielsweise eine Faltungskodierung und eine Blockkodierung, gemäß dem GSM-Standard durchführt. Die auf diese Weise quell- und kanalkodierten Sprachdaten werden dann über die erste Sende-/Empfangseinheit 40 von der ersten Sende-/Empfangsantenne 45 in Form eines ersten Bitstroms über einen Übertragungskanal des ersten, als GSM-Netz ausgebildeten Telekommunikationsnetzes 10 zur Zwischenstation 15 übertragen. Der von der zweiten Sende-/Empfangsantenne 50 empfangene Bitstrom wird dann über die zweite Sende-/Empfangseinheit 55 dem ersten Kanaldekodierer 60 zugeführt. Die erste Sende-/Empfangsantenne 45 bildet dabei mit der zweiten Sende-/Empfangsantenne 50 eine sogenannte GSM-Luftschnittstelle. Die quell- und kanalkodierten Sprachdaten des ersten Bitstroms werden dann im ersten Kanaldekodierer 60 nach dem GSM-Standard kanaldekodiert. Die auf diese Weise kanaldekodierten Sprachdaten sind dabei weiterhin quellkodiert und werden der Steuerung 65 zugeführt. Mit den Sprachdaten wurden von der ersten Mobilstation 1 zur Zwischenstation 15 Rufidentifikationsdaten übertragen, die die zweite Mobilstation 5 als Zielteilnehmer für die zu übertragenden Sprachdaten identifizieren. Diese Rufidentifikationsdaten wurden dabei beispielsweise in einer in der Figur nicht dargestellten Steuerung der ersten Mobilstation 1 erzeugt, vom ersten Kanalkodierer 35 kanalkodiert und im ersten Bitstrom zusammen mit den Sprachdaten an die Zwischenstation 15 übertragen. Zusammen mit den Sprachdaten werden diese Rufidentifikationsdaten dann vom ersten Kanaldekodierer 60 auch kanaldekodiert und ebenfalls der Steuerung 65 zugeführt. Die Rufinformationsdaten können von der ersten Mobilstation 1 zur Zwischenstation 15 auch ein- oder mehrmalig über einen separaten Kontrollkanal getrennt von den Sprachdaten übertragen werden und die Rufnummer der zweiten Mobilstation 5 als Zielstation umfassen. Die Steuerung 65 detektiert diese Rufidentifikationsdaten und ermittelt daraus als Zielteilnehmer für die von der ersten Mobilstation 1 zu übertragenden Sprachdaten die zweite Mobilstation 5. Dabei ist in der Steuerung 65 bekannt, dass zur Übertragung der Sprachdaten von der Zwischenstation 15 an die zweite Mobilstation 5 ein Übertragungskanal im zweiten Telekommunikationsnetz 20 einzurichten ist. Die Übertragung der Sprachdaten im zweiten Telekommunikationsnetz 20 erfolgt dabei nach dem zweiten Mobilfunkstandard, in dem beschriebenen Ausführungsbeispiel nach dem UMTS-Standard. Die dritte Sende-/Empfangsantenne 80 und die vierte Sende-/Empfangsantenne 85 stellen somit eine UMTS-Luftschnittstelle dar. In der Steuerung 65 ist außerdem bekannt, dass die zweite Mobilstation 5 sowohl nach dem GSM-Standard quellkodierte als auch nach dem UMTS-Standard quellkodierte Nutzsignale dekodieren kann. Die Steuerung 65 wählt daher einen Datenübertragungsdienst nach dem UMTS-Standard aus, bei dem die kanaldekodierten aber noch nach dem GSM-Standard quellkodierten Sprachdaten in einen zweiten Bitstrom nach UMTS-Standard eingebettet werden.

Die Zwischenstation 15 kann auch die Möglichkeit einer Quelldekodierung von empfangenen Nutzdaten nach GSM-Standard aufweisen. In diesem Fall ist es sinnvoll, mit den Rufidentifikationsdaten beispielsweise auch die Rufnummer der rufenden ersten Mobilstation 1 an die Zwischenstation 15 zu übertragen und in Abhängigkeit der Detektion dieser Rufnummer in der Steuerung 65 auf eine Quelldekodierung der empfangenen Nutzdaten in der Zwischenstation 15 zu verzichten.

In den zweiten Bitstrom werden außerdem von der Steuerung 65 Signalisierungsdaten eingebettet, wobei die Signalisierungsdaten Informationen über die Art der Quellkodierung der Nutzdaten enthalten. Die Signalisierungsdaten geben somit an, dass die im beschriebenen Beispiel als Sprachdaten vorliegende Nutzdaten nach dem GSM-Standard quellkodiert sind. Im zweiten Kanalkodierer 70 werden die Sprachdaten und die Signalisierungsdaten des zweiten Bitstroms nach dem UMTS-Standard für die Übertragung im zweiten Telekommunikationsnetz 20 kanalkodiert, beispielsweise ebenfalls durch eine Faltungskodierung und eine Blockkodierung. Über die dritte Sende-/Empfangseinheit 75 werden die auf diese Weise kanalkodierten Sprachdaten und Signalisierungsdaten des zweiten Bitstroms über einen Übertragungskanal des zweiten Telekommunikationsnetzes, das in diesem Beispiel als UMTS-Netz ausgebildet ist, zur zweiten Mobilstation 5 übertragen. Bei dem von der Steuerung 65 gewählten Datenübertragungsdienst nach UMTS-Standard muss die Übertragungsqualität und -datenrate geeignet gewählt sein, um die noch nach GSM-Standard quellkodierten Sprachdaten zu übertragen. Der zweite Bitstrom mit den nach UMTS-Standard kanalkodierten Sprachdaten und Signalisierungsdaten wird von der vierten Sende-/Empfangsantenne 85 empfangen und über die vierte Sende-/Empfangseinheit 90 dem zweiten Kanaldekodierer 95 zugeführt. Der zweite Kanaldekodierer 95 führt eine Kanaldekodierung der Sprachdaten und der Signalisierungsdaten des zweiten Bitstroms nach UMTS-Standard durch. Die Auswerteeinheit 100 detektiert dabei die kanaldekodierten Signalisierungsdaten, die ja bekanntlich Informationen über die Art der Quellkodierung der empfangenen Sprachdaten des zweiten Bitstroms umfassen. Im vorliegenden Beispiel extrahiert die Auswerteeinheit 100 aus den kanaldekodierten Signalisierungsdaten des zweiten Bitstroms, dass die Sprachdaten des zweiten Bitstroms nach GSM-Standard quellkodiert sind. Die Auswerteeinheit 100 steuert daher den Schalter 105 derart an, dass der zweite Kanaldekodierer 95 mit dem ersten Quelldekodierer 30 verbunden wird, der als Sprachdekodierer nach GSM-Standard ausgebildet ist. Für den Fall, dass die Auswerteeinheit 100 aus den empfangenen und kanaldekodierten Signalisierungsdaten des zweiten Bitstroms extrahiert, dass die Sprachdaten des zweiten Bitstroms nach UMTS-Standard quellkodiert sind, steuert sie den Schalter 105 derart an, dass er gemäß der gestrichelten Darstellung in der Figur den zweiten Kanaldekodierer 95 mit dem zweiten Quelldekodierer 110 verbindet, der dann als Sprachdekodierer nach UMTS-Standard ausgebildet ist. Da gemäß den beschriebenen Ausführungsbeispiel die Sprachdaten des zweiten Bitstromes nach GSM-Standard quellkodiert sind, wird der zweite Kanaldekodierer 95 mit dem ersten Sprachdekodierer 30 verbunden und die im zweiten Kanaldekodierer 95 kanal-dekodierten Sprachdaten werden im ersten Sprachdekodierer 30 quelldekodiert. Die am Ausgang des ersten Sprachdekodierers 30 beziehungsweise des zweiten Sprachdekodierers 110 anliegenden kanal- und quelldekodierten Sprachsignale werden dann zur Weiterverarbeitung weiteren in der Figur nicht dargestellten Funktionsblöcken zugeführt.

Die Signalisierungsdaten können von der Zwischenstation 15 zur zweiten Mobilstation 5 auch ein- oder mehrmalig über einen separaten Kontrollkanal getrennt von den Nutzdaten übertragen werden und wiederum die Rufnummer der rufenden ersten Mobilstation 1 umfassen, anhand der die Auswerteeinheit 100 ebenfalls zum Anschluss des ersten Sprachdekodierers 30 an den zweiten Kanaldekodierer 95 veranlasst werden kann.

Anstelle oder zusätzlich zu den Sprachdaten können als Nutzdaten zumindest auch Video- und/oder Audiodaten und/oder Textdaten von der ersten Mobilstation 1 zur zweiten Mobilstation 5 in der beschriebenen Weise und gemeinsam in einem Bitstrom übertragen werden. Die Übertragung im ersten Telekommunikationsnetz 10 und im zweiten Telekommunikations- netz 20 kann dabei beispielsweise frequenz- oder zeitmultiplex erfolgen, wobei für die beiden verschiedenen Telekommunikationsnetze 10, 20 unterschiedliche Multiplexverfahren zur Anwendung kommen können. In diesem Falle wäre in der Zwischenstation 15 beispielsweise auch eine Umsetzung von Zeit- in Frequenzmultiplex oder umgekehrt zu realisieren. Es können auch beliebige andere Multiplex- oder Kanalzugriffsverfahren zur Anwendung kommen.

Mit dem erfindungsgemäßen Verfahren ist es somit beispielsweise möglich, nach dem GSM-Standard quellkodierte Nutzdaten über eine Datenverbindung nach UMTS-Standard zu übertragen. Auf diese Weise kann eine Anforderung an den UMTS-Standard als Mobilfunkstandard der dritten Generation erfüllt werden, eine Rückwärtskompatibilität zum bestehenden GSM-Standard als Mobilfunkstandard der zweiten Generation sicherzustellen, um Nutzdaten zwischen Mobilstationen nach dem GSM-Standard und Mobilstationen nach dem UMTS-Standard über eine Mobilfunkverbindung auszutauschen. Das erfindungsgemäße Verfahren vereinfacht dabei die Nutzdatenübertragung zwischen Mobilstationen, die nach GSM-Standard realisiert sind, und solchen Mobilstationen, die sowohl nach GSM-Standard als auch nach UMTS-Standard realisiert sind, wobei für den Teil der Datenübertragung vom entsprechenden Telekommunikationsnetz zu der sowohl nach GSM-Standard als auch nach UMTS-Standard realisierten Mobilstation die UMTS-Luftschnittstelle benutzt wird. Dabei liegen die Nutzdaten bei der sowohl nach GSM-Standard als auch nach UMTS-Standard realisierten Mobilstation in einer Qualität vor, die nicht durch eine Transkodierung zwischen einem Quellcode nach GSM-Standard und einem Quellcode nach UMTS-Standard herabgesetzt wurde.

Das erste Telekommunikationsnetz 10 und das zweite Telekommunikationsnetz 20 können jeweils auch als hybrides GSM-/UMTS-Netz ausgebildet sein, welches die Funktionalität eines GSM-Netzes und eines UMTS-Netzes vereint. Das erste Telekommunikationsnetz 10 und das zweite Telekommunikationsnetz 20 können dabei auch identisch sein.

Es kann auch vorgesehen sein, dass die Nutzdaten vom ersten Telekommunikationsnetz 10 über ein oder mehrere beliebige Festnetze und gegebenenfalls entsprechende Zwischenstationen an das zweite Telekommunikationsnetz 20 und von dort an die zweite Mobilstation 5 übertragen werden, wobei eine Transkodierung bezüglich des Quellkodes der Nutzdaten, also eine Quelldekodierung und erneute Quellkodierung in den entsprechenden Zwischenstationen nicht erfolgt, sondern lediglich eine Kanaldekodierung und gegebenenfalls eine erneute Kanalkodierung.

Als erster Mobilfunkstandard kann beispielsweise auch der in Nordamerika vorgesehene Standard IS95, (Interim Standard 95), der in Japan vorgesehene Standard PDC, (Personal Digital Cellular), oder dergleichen gewählt werden.

## Patentansprüche

1. Verfahren zur Übertragung von digitalen Nutzdaten von einer ersten Mobilstation (1) zu einer zweiten Mobilstation (5), wobei die Nutzdaten von der ersten Mobilstation (1) für die Übertragung in einem ersten Telekommunikationsnetz (10) nach einem ersten Mobilfunkstandard in einer ersten Stufe quellkodiert und in einer zweiten Stufe kanalkodiert werden, wobei die in der ersten und in der zweiten Stufe kodierten Nutzdaten in Form eines ersten Bitstroms über einen Übertragungskanal des ersten Telekommunikationsnetzes (10) zu einer Zwischenstation (15) übertragen werden, wobei die Nutzdaten des ersten Bitstroms von der Zwischenstation (15) in der zweiten Stufe nach dem ersten Mobilfunkstandard kanaldekodiert werden, wobei die Nutzdaten von der Zwischenstation (15) für die Übertragung in einem zweiten Telekommunikationsnetz (20) nach einem zweiten Mobilfunkstandard in der zweiten Stufe kanalkodiert werden, wobei die Nutzdaten in einem zweiten Bitstrom über einen Übertragungskanal des zweiten Telekommunikationsnetzes (20) zur zweiten Mobilstation (5) übertragen werden, und wobei die Nutzdaten von der zweiten Mobilstation (5) in einer zweiten Stufe kanaldekodiert werden, **dadurch gekennzeichnet, dass** von der Zwischenstation (15) Signalisierungsdaten an die zweite Mobilstation (5) übertragen werden, wobei eine Rufnummer der ersten Mobilstation (1) von der Zwischenstation (15) empfangen wird, und wobei die Signalisierungsdaten Informationen über die Art der Kodierung der Nutzdaten in der ersten Stufe nach dem ersten Mobilfunkstandard in Form der Rufnummer der ersten Mobilstation (1) enthalten, **dass** die Signalisierungsdaten ein- oder mehrmalig über einen separaten Kontrollkanal von der Zwischenstation (15) an die zweite Mobilstation (5) übertragen werden, **und dass** die von der zweiten Mobilstation (5) in der zweiten Stufe von einem zweiten Kanaldekodierer (95) kanaldekodierten Nutzdaten in Abhängigkeit der von der zweiten Mobilstation (5) empfangenen Signalisierungsdaten von der zweiten Mobilstation (5) in einer ersten Stufe von einem ersten Sprachdekodierer (30) quelldekodiert werden, wobei anhand der Rufnummer der ersten Mobilstation (1) eine Auswerteeinheit (100) in der zweiten Mobilstation (5) zum Anschluss des ersten Sprachdekodierers (30) an den zweiten Kanaldekodierer (35) veranlasst wird.

2. Verfahren nach Anspruch 1, **dadurch gekennzeichnet, dass** als Nutzdaten zumindest Video- und/oder Audio- und/oder Text- und/oder Sprachdaten übertragen werden.

3. Verfahren nach einem der vorherigen Ansprüche, **dadurch gekennzeichnet, dass** die Nutzdaten im ersten Telekommunikationsnetz (10) nach dem GSM, Global System for Mobile Communications, Standard in der ersten und in der zweiten Stufe quell- und kanalkodiert, übertragen werden, dass die Nutzdaten im zweiten Telekommunikationsnetz (20) nach dem UMTS, Universal Mobile Telecommunications System, Standard, zusammen mit den Signalisierungsdaten, die Informationen über die Kodierung der Nutzdaten in der ersten Stufe nach dem GSM-Standard umfassen, in der zweiten Stufe kanalkodiert werden, dass die in der zweiten Stufe kanalkodierten Nutzdaten an die zweite Mobilstation (5) übertragen werden und die Signalisierungsdaten ein- oder mehrmalig über einen separaten Kontrollkanal von der Zwischenstation (15) an die zweite Mobilstation (5) übertragen werden, und dass die von der zweiten Mobilstation (5) in der zweiten Stufe kanaldekodierten Nutzdaten von der zweiten Mobilstation (5) nach Auswertung der Signalisierungsdaten nach dem GSM-Standard in der ersten Stufe quelldekodiert werden.

4. Verfahren nach Anspruch 2 oder 3, **dadurch gekennzeichnet, dass** die Nutzdaten in der ersten Mobilstation (1) durch einen Sprachkodierer (25) nach dem GSM-Standard ITU-T G.729, quellkodiert werden, und dass die Nutzdaten in der zweiten Mobilstation (5) durch den ersten Sprachdekodierer (30) nach dem GSM-Standard quelldekodiert werden.

## Claims

1. Method for transmitting digital user data from a first mobile station (1) to a second mobile station (5), wherein the user data are source-encoded on the basis of a first mobile radio standard in a first stage and are channel-encoded in a second stage by the first mobile station (1) for transmission in a first telecommunication network (10), wherein the user data encoded in the first and second stages are transmitted to an intermediate station (15) in the form of a first bit stream via a transmission channel in the first telecommunication network (10), wherein the user data in the first bit stream are channel-decoded on the basis of the first mobile radio standard in the second stage by the intermediate station (15), wherein the user data are channel-encoded on the basis of a second mobile radio standard in the second stage by the intermediate station (15) for transmission in a second telecommunication network (20), wherein the user data are transmitted in a second bit stream to the second mobile station (5) via a transmission channel in the second telecommunication network (20), and wherein the user data are channel-decoded in a second stage by the second mobile station (5), **characterized in that** the intermediate station (15) transmits signalling data to the second mobile station (5), wherein a telephone number for the first mobile station (1) is received from the intermediate station (15), and wherein the signalling data contain information about the type of encoding for the user data in the first stage on the basis of the first mobile radio standard in the form of the telephone number of the first mobile station (1), **in that** the signalling data are transmitted from the intermediate station (15) to the second mobile station (5) one or more times via a separate control channel, and **in that** the user data channel-decoded by the second mobile station (5) in the second stage by a second channel decoder (95) are source-decoded by the second mobile station (5) in a first stage by a first voice decoder (30) on the basis of the signalling data received by the second mobile station (5), wherein the telephone number of the first mobile station (1) is used to prompt an evaluation unit (100) in the second mobile station (5) to connect the first voice decoder (30) to the second channel decoder (35).

2. Method according to Claim 1, **characterized in that** the user data transmitted are at least video and/or audio and/or text and/or voice data.

3. Method according to one of the preceding claims, **characterized in that** the user data are transmitted in the first telecommunication network (10) on the basis of the GSM, Global System for Mobile Communications, standard, having been source-encoded and channel-encoded in the first and second stages, **in that** the user data are channel-encoded in the second telecommunication network (20) on the basis of the UMTS, Universal Mobile Telecommunications System, standard, together with the signalling data, which comprise information about the encoding of the user data in the first stage on the basis of the GSM standard, in the second stage, **in that** the user data channel-encoded in the second stage are transmitted to the second mobile station (5) and the signalling data are transmitted once or repeatedly from the intermediate station (15) to the second mobile station (5) via a separate control channel, and **in that** the user data channel-decoded in the second stage by the second mobile station (5) are source-decoded in the first stage by the second mobile station (5) following evaluation of the signalling data on the basis of the GSM standard.

4. Method according to Claim 2 or 3, **characterized in that** the user data are source-encoded in the first mobile station (1) by a voice encoder (25) on the basis of the GSM standard ITU-T G.729, and **in that** the user data are source-decoded in the second mobile station (5) by the first voice decoder (30) on the basis of the GSM standard.

## Revendications

1. Procédé pour le transfert de données numériques utiles d'une première station mobile (1) vers une deuxième station mobile (5), par lequel ces données utiles sont codées à la source par la première station mobile (1) en une première étape pour la transmission sur un premier réseau de télécommunication (10) selon une première norme de téléphonie mobile, et codées par canal dans une deuxième étape, de sorte que les données utiles codées dans la première étape et dans la deuxième étape sont transmises sous la forme d'un premier flux de bits par le biais d'un canal de transmission du premier réseau de télécommunication (10) vers une station intermédiaire (15), si bien que les données utiles du premier flux de bits sont décodées par canal par la station intermédiaire (15) dans la deuxième étape selon la première norme de téléphonie mobile, et que les données utiles sont codées par canal par la station intermédiaire (15) dans la deuxième étape pour la transmission sur un deuxième réseau de télécommunication (20) selon une deuxième norme de téléphonie mobile, si bien que les données utiles sont transmises en un deuxième flux de bits par un canal de transmission du deuxième réseau de télécommunication (20) vers la deuxième station mobile (5), et que les données utiles sont décodées par canal par la deuxième station mobile (5) en une deuxième étape, **caractérisé en ce que** des données de signalisation sont transmises par la station intermédiaire (15) vers la deuxième station mobile (5), de sorte qu'un numéro d'appel de la première station mobile (1) est reçu par la station intermédiaire (15), et que ces données de signalisation contiennent des informations sur la nature du codage des données utiles dans la première étape selon la première norme de téléphonie mobile sous la forme du numéro d'appel de la première station mobile (1), **que** ces données de signalisation sont transmises une ou plusieurs fois par la station intermédiaire (15) par le biais d'un canal de contrôle séparé vers la deuxième station mobile (5), et que les données décodées par canal par la deuxième station mobile (5) par un deuxième décodeur de canal (95) dans la deuxième étape sont décodées à la source dans une première étape par un premier décodeur vocal (30) par la deuxième station mobile (5), en fonction des données de signalisation reçues de la deuxième station mobile (5) ; de ce fait, une unité de traitement (100) est créée dans la deuxième station mobile (5) pour le raccordement du premier décodeur vocal (30) au deuxième décodeur de canal (35) sur la base du numéro d'appel de la première station mobile (1).

2. Procédé selon la revendication 1, **caractérisé en ce qu'**on transmet au minimum des données vidéo et/ou audio et/ou de texte et/ou vocales en tant que données utiles.

3. Procédé selon l'une des revendications qui précèdent, **caractérisé en ce que** les données utiles sont transmises dans la première étape et la deuxième étape, codées à la source et codées par canal, sur le premier réseau de télécommunication (10) conformément à la norme GSM, Global System for Mobile Communications, que les données utiles sont codées par canal dans la deuxième étape sur le deuxième réseau de télécommunication (20) selon la norme UMTS, Universal Mobile Telecommunications System, conjointement avec les données de signalisation qui contiennent les informations relatives au codage des données utiles dans la première étape selon la norme GSM deuxième, que les données utiles codées par canal dans la deuxième étape sont transmises à la deuxième station mobile (5), et que les données de signalisation sont transmises une ou plusieurs fois par un canal de contrôle séparé par la station intermédiaire (15) à la deuxième station mobile (5), et que les données mobiles décodées par canal par la deuxième station mobile (5) dans la deuxième étape sont décodées à la source par la deuxième station mobile (5) après l'évaluation des données de signalisation selon la norme GSM dans la première étape.

4. Procédé selon la revendication 2 ou 3, **caractérisé en ce que** les données utiles sont codées à la source dans la première station mobile (1) par un codeur vocal (25) selon la norme GSM ITU-T G.729, et que les données utiles sont codées à la source dans la deuxième station mobile (5) par le premier décodeur vocal (30) selon la norme GSM.
